# EUROPÄISCHE PATENTSCHRIFT

(11) **EP 0 820 914 B1**
(45) Veröffentlichungstag und Bekanntmachung des Hinweises auf die Patenterteilung: **25.09.2002**
(21) Anmeldenummer: 97110686.9
(22) Anmeldetag: 01.07.1997
(51) Int. Cl.: B62D 1/04

(54) **Abdeckung für ein Lenkrad eines Fahrzeugs**
Cover for a steering wheel of a vehicle
Recouvrement pour volant de direction de véhicule

(30) Priorität: 24.07.1996 DE 19629880
(43) Veröffentlichungstag der Anmeldung: 28.01.1998
(73) Patentinhaber: Bayerische Motoren Werke Aktiengesellschaft, 80788 München (DE)
(72) Erfinder: Faulstroh, Hans Joachim, 86511 Schmiechen (DE); Zimmerhackl, Dietmar, 80796 München (DE)

(56) Entgegenhaltungen:
- EP-A- 0 648 661
- US-A- 3 823 618
- US-A- 4 962 947
- PATENT ABSTRACTS OF JAPAN vol. 011, no. 235 (M-612), 31. Juli 1987 & JP 62 046762 A (TOYODA GOSEI CO LTD), 28. Februar 1987

## Beschreibung

Die Erfindung betrifft eine Abdeckung für ein Lenkrad eines Fahrzeugs, mit den im Oberbegriff des Patentanspruchs 1 angegebenen Merkmalen.

Ein Fahrzeug-Lenkrad kann beispielsweise so aufgebaut sein, wie in der US 3,823,618 beschrieben ist. Dabei ist ein vorgeformtes Lenkrad-Skelett mit einem Kunststoffmaterial, bspw. Polyurethanschaum umspritzt. Um dem Lenkrad das Aussehen eines einheitlichen Bauteils ohne Trennfugen zwischen dem Radkranz und den Speichen zu verleihen und dennoch die zentrale Montagestelle, an der das Lenkrad mittels einer Mutter mit einer Lenkspindel verschraubt wird, zugänglich zu machen, wird in der genannten US 3,823,618 vorgeschlagen, an den Speichen diese Umspritzung ablösbar zu gestalten, so dass dieser angespritzte Überzug vorübergehend durch Anheben von den Speichen entfernt werden kann. Hierbei handelt es sich um eine elastische flexible Verformung eines dem Fahrer zugewandten Abschnittes des Lenkrad-Skelett-Überzugs.

Eine gattungsgemäße Lenkrad-Gestaltung ist in der EP 0 648 661 A1 vorgeschlagen, da hier das Lenkrad eines Kraftfahrzeugs auf der fahrerabgewandten Seite mit einem Verkleidungsteil abgedeckt ist, das jeweils über eine Befestigungsschraube mit einer Speiche des Lenkrads verbunden ist. Ein ansonsten üblicher Lenkrad-Skelett-Überzug, bestehend aus einer Schicht aus außenliegenden Schicht aus Polyurethanschaum und einer darunter liegenden Schicht aus einem relativ steifen Thermoplast insbesondere auf den Lenkrad-Kranz sowie ggf. auf die dem Fahrer zugewandte Seite der Speichen aufgebracht.

Bei diesem bekannten Lenkrad ist die Speiche durch zwei Teile gebildet, von denen das äußere Teil den Lenkkranz trägt, der in einem aufwendigen Verfahren umhüllt ist. Die Umhüllung kann an das Aussehen des Fahrgastraumes angepaßt sein. Soll das Lenkrad ein anderes Aussehen aufweisen, ist die jeweils äußere Speichenhälfte zusammen mit dem Lenkkranz und einer mittleren Prallplatte auszuwechseln. Nach der Nutzungszeit des Fahrzeugs kann das Lenkrad nicht ohne weiteres in sortenreine Teile zerlegt werden. An der Überlappungsstelle der beiden Speichenhälften entsteht eine Materialkonzentration, die das Gewicht des Lenkrades erhöht.

Der Erfindung liegt die Aufgabe zugrunde, eine Abdeckung für ein Lenkrad eines Fahrzeugs mit den Merkmalen im Oberbegriff des Patentanspruches 1 anzugeben, die eine Gewichtsreduktion und Montageerleichterung des Lenkrades ermöglicht und nach der Gebrauchszeit des Lenkrades eine weitgehend sortenreine Trennung der verwendeten Materialien ermöglicht.

Diese Aufgabe ist durch die im Patentanspruch 1 angegebenen Merkmale gelöst. Das Verkleidungsteil deckt die betreffende Speiche und einen wesentlichen Teil der Lenkradnabe ab, wodurch das Lenkrad auf der fahrerabgewandten Seite ein optisch ansprechendes Aussehen aufweist, das beispielsweise von einer außerhalb des Fahrzeugs befindlichen Person bei einem Blick durch die vordere Windschutzscheibe des Fahrzeugs auf das Lenkrad erkennbar ist. Die Lenkradnabe, die Speiche bzw. die Speichen und der Lenkkranz können mit einer geringeren Masse gefertigt werden, wodurch sich das Gewicht des Lenkrades vermindert, wenn das Verkleidungsteil aus einem leichteren Material als der Lenkradkern gefertigt ist. Sind auch die dem Fahrer zugewandten Bereiche des Lenkrades von einem oder mehreren Abdeckteilen verkleidet, kann der aus dem Lenkkranz, die Speichen und der Lenkradnabe gebildete Lenkradkem beispielsweise nach einem kostengünstigen Verfahren gefertigt sein, bei dem der unverkleidete Lenkradkern eine optisch weniger ansprechende Oberfläche aufweisen kann. Das Verkleidungsteil und/oder das Abdeckteil können über Schnellbefestigungselemente, wie beispielsweise Rastzungen oder -nasen bzw. andere lösbare Befestigungselemente wie Schrauben, an der betreffenden Speiche befestigt sein. Nach der Gebrauchszeit des Lenkrades können das Verkleidungsteil und gegebenenfalls das Abdeckteil von dem Lenkradkem abgenommen werden, wodurch eine sortenreine Trennung der verwendeten Materialien erleichtert ist, die beispielsweise für einen vergleichbaren oder einen anderen Verwendungszweck aufzubereiten sind.

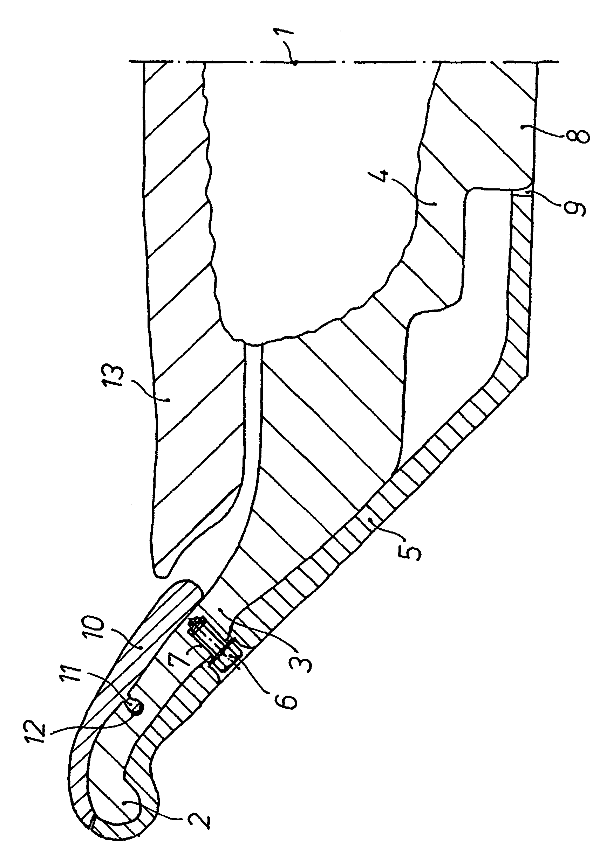

Ein Ausführungsbeispiel der Erfindung wird anhand einer Zeichnung mit einer einzigen Figur näher erläutert, die einen Querschnitt durch eine Hälfte eines an einem Kraftfahrzeug vorgesehenen Lenkrades darstellt.

In der einzigen Figur ist das Lenkrad eines Kraftfahrzeugs in einem Schnitt durch die Lenkradachse 1 dargestellt. Das Lenkrad weist einen um die Lenkradachse 1 annähernd runden und im Querschnitt etwa kreisförmigen Lenkkranz 2 auf, der über mehrere drehsymmetrisch oder -unsymmetrisch angeordnete Speichen 3 mit einer lediglich hälftig dargestellten Lenkradnabe 4 verbunden ist. Der Lenkkranz 2, die Speichen 3 und die Lenkradnabe 4 sind aus demselben Material gefertigt und einstückig durch einen Lenkradkern gebildet. Auf der fahrerabgewandten Seite des Lenkrades ist ein Verkleidungsteil 5 vorgesehen, das über eine Befestigungsschraube 6 mit der Speiche 3 verbunden ist. Die Befestigungsschraube 6 ist hierzu in ein Gewinde in einer Sackbohrung 7 in der Speiche 3 eingeschraubt. Das Verkleidungsteil 5 weist für den Durchtritt einer nicht dargestellten Lenkstange und eines axialen Ansatzes 8 an der Lenkradnabe 4 eine zentrale Öffnung 9 auf. Das Verkleidungsteil 5 erstreckt sich im Bereich der Speichen 3 von der zentralen Öffnung 9 bis zum Lenkkranz 2 und umgreift diesen teilweise. Durch die große Anlagefläche zwischen dem Verkleidungsteil 5 und der Speiche 3 ist das Verkleidungsteil 5 stabil festgehalten und führt beim Überfahren von Bodenunebenheiten keine Bewegungen aus, die Geräusche verursachen können. Auf der dem Fahrer des Kraftfahrzeugs zugewandten Seite des Lenkrades ist an der Speiche 3 ein Abdeckteil 10 lösbar befestigt, das an der Speiche 3 großflächig anliegt. Das Abdeckteil 10 weist eine zu der Speiche 3 gerichtete Rastnase 11 auf, die in eine Rastausnehmung 12 in der Speiche 3 eingreift. Das Abdeckteil 10 umgreift den Lenkkranz 2 teilweise und erstreckt sich in radialer Richtung von dem Lenkkranz 2 zu einer mittleren Abdeckkappe 13, die beispielsweise eine Prallplatte oder ein Hupplatte sein kann. Das Verkleidungsteil 5 und/oder das Abdeckteil 10 können in verschiedenen Farbvarianten gefertigt sein, von denen die jeweils gewünschte Variante mit demselben Lenkradkem zu verbinden ist. Mit dem abnehmbaren Verkleidungsteil 5 sowie dem abnehmbaren Abdeckteil 10 und dem einstückig gefertigten Lenkradkern ist die Montage und beispielsweise nach Ablauf der Gebrauchszeit eine Demontage des Lenkrades in weitgehend sortenreine Teile vereinfacht. In der Nutzungszeit des Lenkrades kann das Aussehen des Lenkrades durch einen Wechsel des Verkleidungsteils und/oder des Abdeckteils kostengünstig verändert werden. Das Lenkrad kann in seiner Masse vermindert sein, wodurch das Schwingungsverhalten das Lenkrades verbessert ist. Bei Verwendung des Verkleidungsteiles und/oder des Abdeckteiles ist bei einem Lenkrad mit einer Lederummantelung der sichtbare Bereich kleiner, wodurch der zur Herstellung einer sichtbaren Ledemaht erforderliche Fertigungsáufwand vermindert ist. Es ist nicht erforderlich, den Lenkkranz, die Speichen und die Lenkradnabe einstückig auszubilden. Diese Teile können auch einzeln und in beliebiger Kombination miteinander gefertigt sein. Der Lenkkranz bzw. der Lenkkranzkem kann durch einen Rohrkranz oder dergleichen gebildet sein. Anstelle der bei dem Ausführungsbeispiel verwendeten Befestigungsschrauben bzw. in Rastausnehmungen eingreifenden Rastnasen können auch andere Befestigungselemente vorgesehen sein, die beispielsweise schnell lösbar sind und eine sichere Befestigung des Verkleidungsteiles an der Speiche bzw. eventuell an dem Lenkkranz bzw. an der Lenkradnabe ermöglichen.

## Patentansprüche

1. Abdeckung für ein Lenkrad eines Fahrzeugs, das einen Lenkkranz (2), eine Speiche (3) und eine Lenkradnabe (4) aufweist, wobei die Abdeckung ein Verkleidungsteil (5) aufweist, das auf der fahrerabgewandten Seite das Lenkrad abdeckend an der Speiche (3) lösbar befestigt ist und eine zentrale Öffnung (9) für den Durchtritt einer Lenkstange aufweist,
**dadurch gekennzeichnet, dass** sich das Verkleidungsteil (5) im Bereich der Speiche (3) radial von der zentralen Öffnung (9) bis zum Lenkkranz (2) erstreckt und diesen teilweise umgreift, und dass auf der dem Fahrer des Fahrzeugs zugewandten Seite des Lenkrades für den Fahrer sichtbar ein Abdeckteil (10) an der Speiche (3) lösbar befestigt ist, das sich an das Verkleidungsteil anschließend radial von dem Lenkkranz (2) zu einer mittleren Abdeckkappe (13) des Lenkrades erstreckt.

2. Abdeckung nach Anspruch 1, **dadurch gekennzeichnet, dass** der Lenkkranz (2), die Speiche (3) und die Lenkradnabe (4) aus demselben Material bestehen und durch einen einstückigen Lenkradkern gebildet sind.

3. Abdeckung nach Anspruch 1 oder 2, **dadurch gekennzeichnet, dass** das Abdeckteil (10) und/oder das Verkleidungsteil eine Rastnase (11) aufweist, die in eine Rastausnehmung (12) in der Speiche (3) eingreift.

4. Abdeckung nach einem der vorangegangenen Ansprüche,
**dadurch gekennzeichnet, dass** das Abdeckteil (10) und/oder das Verkleidungsteil (5) in verschiedenen Farbvarianten gefertigt sind, die jeweils mit demselben Lenkradkern lösbar zu verbinden sind.

## Claims

1. A cover for a vehicle steering wheel comprising a rim (2), a spoke (3) and a hub (4), the cover comprising a facing part (5) releasably fastened to the spoke (3) and covering the side of the steering wheel remote from the driver and having a central opening (9) for a steering rod,
**characterised in that** in the region of the spoke (3), the facing part (5) extends radially from the central opening (9) to the rim (2) and partly surrounds it, and on the side of the steering wheel facing the driver, a cover part (10) visible to the driver is releasably fixed to the spoke (3) and adjoins the facing part and extends radially from the rim (2) towards a central cap (13) covering the steering wheel.

2. A cover according to claim 1, **characterised in that** the rim (2), the spoke (3) and the hub (4) are made of the same material and form a one-piece steering-wheel core.

3. A cover according to claim 1 or 2, **characterised in that** the cover part (10) and/or the facing part has a lug (11) which engages in a catch or recess (12) in the spoke (3).

4. A cover according to any of the preceding claims, **characterised in that** the cover part (10) and/or the facing part (5) are produced in various colours, each releasably connectable to the same steering-wheel core.

## Revendications

1. Recouvrement pour volant de direction de véhicule comprenant une couronne de volant (2), une branche (3) et un moyeu de volant (4), le recouvrement présentant une pièce d'habillage (5), fixée sur la branche (3) de manière amovible du côté du volant éloigné du conducteur, et percée d'une ouverture centrale (9) pour le passage d'un arbre de direction,
**caractérisé en ce que**
la pièce d'habillage (5), dans la zone de la branche (3), s'étend radialement de l'ouverture centrale (9) à la couronne de volant (2) qu'elle enveloppe en partie, tandis que du côté du volant faisant face au conducteur est fixée de manière amovible sur la branche (3) une pièce de couverture (10) visible par le conducteur et qui fait suite à la pièce d'habillage en s'étendant radialement de la couronne de volant (2) à un capot de couverture (13) situé au centre du volant.

2. Recouvrement selon la revendication 1,
**caractérisé en ce que**
la couronne de volant (2), la branche (3) et le moyeu du volant (4) sont faits d'un même matériau et constituent le noyau du volant.

3. Recouvrement selon l'une quelconque des revendications 1 ou 2,
**caractérisé en ce que**
la pièce de couverture (10) et/ou la pièce d'habillage (10) présente un ergot d'arrêt engagé dans un évidement d'arrêt (12) que présente la branche (3).

4. Recouvrement selon l'une quelconque des revendications précédentes,
**caractérisé en ce que**
la pièce de couverture (10) et/ou la pièce d'habillage (5) sont fabriquées selon différentes variantes de couleurs, qui peuvent être montées de manière amovible sur le même noyau de volant.
